# EUROPEAN PATENT APPLICATION

(11) **EP 3 949 762 A1**
(43) Date of publication of application: **09.02.2022**
(21) Application number: 21182737.3
(22) Date of filing: 30.06.2021
(51) Int. Cl.: A24C 5/32

(54) **A CONVEYOR FOR TOBACCO INDUSTRY PRODUCTS, KIT AND METHOD FOR CHANGING THE FORMAT OF THIS CONVEYOR**

(30) Priority: 23.07.2020 IT 202000017809
(71) Applicant: G.D S.p.A., 40133 Bologna (BO) (IT)
(72) Inventor: SGRIGNUOLI, Vittorio, I-40133 Bologna (IT); GAMBERINI, Giuliano, I-40133 Bologna (IT)
(74) Representative: Frontoni, Stefano

(57) **Abstract**

The invention relates to a conveyor (1) for tobacco industry products (P), comprising a movable body (10) that is rotatable around a longitudinal axis (H), and at least one receiving assembly (2) configured for receiving tobacco industry products. The receiving assembly (2) comprises: at least one housing portion (3) shaped to receive at least one tobacco industry product (P), and a base portion (4), arranged between the housing portion (3) and the body (10).

The conveyor (1) comprises first fixing means (5) for fastening the base portion (4) to the body (10); and second fixing means (6) for fastening the housing portion (3) to the base portion (4), in a removable manner.

## Description

The present invention relates to a conveyor for tobacco industry products, a kit and a format changing method for a conveyor for tobacco industry products.

It should be noted that the expression "tobacco industry products" means finished or semi-finished products of any kind relating to this sector, for example, cigarettes, filter cigarettes, filters of any type or parts intended to form part of a smoking article. A smoking article may be traditional, or rather, it may involve the combustion of part of it or, instead, it may be of the "heat not burn" (HNB) type, which only involves heating and not combustion of the article itself.

A known type of machine for tobacco industry products comprises a base that has a vertical support wall for a plurality of operating elements, consisting largely of conveyors and, more specifically, of rotating drums with a horizontal rotation axis.

The rotating drums comprise a fixed central part and a movable peripheral part rotating around the axis of the drum. On the movable part there are several suction seats, designed to house and retain the tobacco industry products during the conveying and possible processing steps.

To ensure the retention of the products in the seats, the machines comprise an air suction installation connected to the rotating drums, and arranged to generate a determined vacuum at the respective suction seats, with which it communicates, to allow the retention of the tobacco industry products by each rotating drum.

To date, the need to adapt the aforesaid machines to different products to be processed is strongly felt, for example, parts (filters, parts for tobacco, etc.) of different length and/or diameter.

The seats of the rotating drums must be as suitable as possible to the size and shape of the product to be retained: to meet this need, when it is necessary to change the type of products to be conveyed, the rotating drums present in the machine, which have a determined size and shape, are replaced with others, which have seats that are sized and shaped as much as possible ad hoc for the product to be processed from that moment on.

The operation of replacing the rotating drums is, however, particularly complicated and, moreover, requires long machine downtimes, which affect the productivity of the machine itself.

The object of the present invention is to overcome the aforesaid drawbacks.

This object is achieved by means of a conveyor for tobacco industry products, a kit and a format change method for a conveyor for tobacco industry products in accordance with the attached claims.

Advantageously, the conveyor, the kit and the method proposed by the present invention allow a rapid adaptation of a machine for tobacco industry products to the processing of products of different size and/or shape. Machine downtimes are reduced compared to the known art, and, consequently, the productivity of the machine itself increases, which is thus extremely flexible.

Furthermore, the conveyor, the kit and the method proposed by the present invention greatly simplify the format changing operations with respect to the prior art.

Specific embodiments of the invention will be outlined in greater detail in the following description, with reference to the attached drawings, in which:
- Figure 1 is an exemplary and schematic front view of a tobacco industry machine;
- Figure 1A is an enlarged perspective view of an example of a tobacco industry product;
- Figure 2 is an enlarged and partial perspective view of a conveyor for tobacco industry products according to the present invention;
- Figure 3A is an enlarged perspective view of a receiving assembly, which forms part of the conveyor according to the present invention;
- Figure 3B is an exploded view of the detail of Figure 3A;
- Figure 4 is another enlarged view of the detail of Figure 3A, according to a different perspective;
- Figures 5A and 5B are perspective views, respectively, from below and from above, enlarged, of a housing portion that is part of the receiving assembly of Figure 3A;
- Figure 6 is an enlarged perspective view of a kit for changing format according to the present invention.

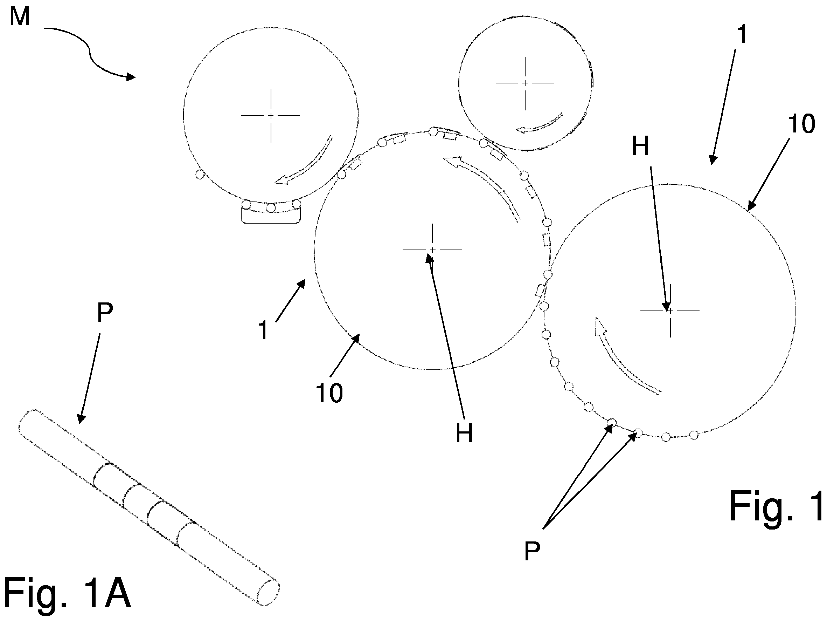

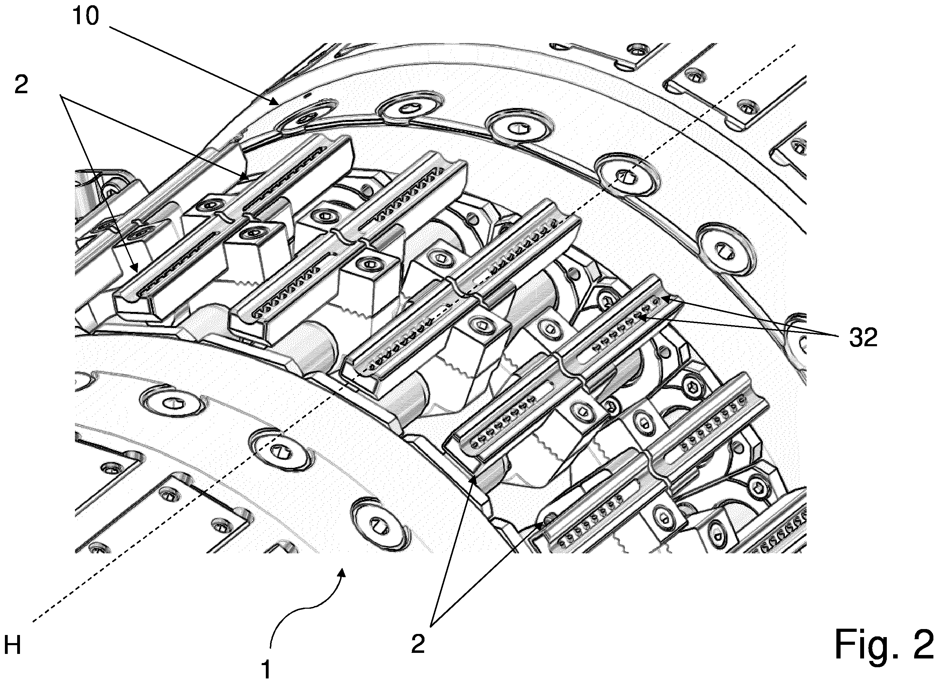

With reference to the attached Figures 1 and 2, numeral 1 indicates a conveyor for products P of the tobacco industry according to the present invention. It should be noted that the expression "tobacco industry products P" means finished or semi-finished products of any type inherent in this sector, for example, cigarettes, filter cigarettes, filters of any type, or parts intended to form part of a smoking article. A smoking article may be traditional, or rather, it may involve the combustion of part of it or, instead, of the "heat not burn" (HNB) type, which only involves heating and not combustion by the article itself.

A tobacco industry product P is illustrated, by way of example, in Figure 1A and is indicated schematically in Figure 1.

The conveyor 1 is used in a machine M for producing and/or processing tobacco industry products P (in Figure 1, one is partially represented, by way of example, and in a schematic manner.)

The conveyors (rotating drums) for tobacco industry products P generally comprise a fixed central portion and a movable body, arranged externally to the central portion.

The conveyor 1 for tobacco industry products P according to the invention comprises a movable body 10 that is rotatable around a longitudinal axis H, and at least one receiving assembly 2 configured for receiving tobacco industry products. The longitudinal axis H of the conveyor 1 is represented indicatively in Figure 1 and its development direction is represented in Figure 2.

In detail, the receiving assembly 2 comprises: at least one housing portion 3 shaped to house at least one tobacco industry product P to be conveyed, and a base portion 4 arranged, when the conveyor 1 is in use or ready for use, between the housing portion 3 and the body 10.

The conveyor 1 comprises first fixing means 5 for fastening the base portion 4 to the body 10, and second fixing means 6 for fastening the housing portion 3 to the base portion 4 in a removable manner.

When the conveyor 1 is in use or ready for use, the base portion 4 is connected to the housing portion 3 by the second fixing means 6 and to the body 10 by the first fixing means 5 (see Figure 2).

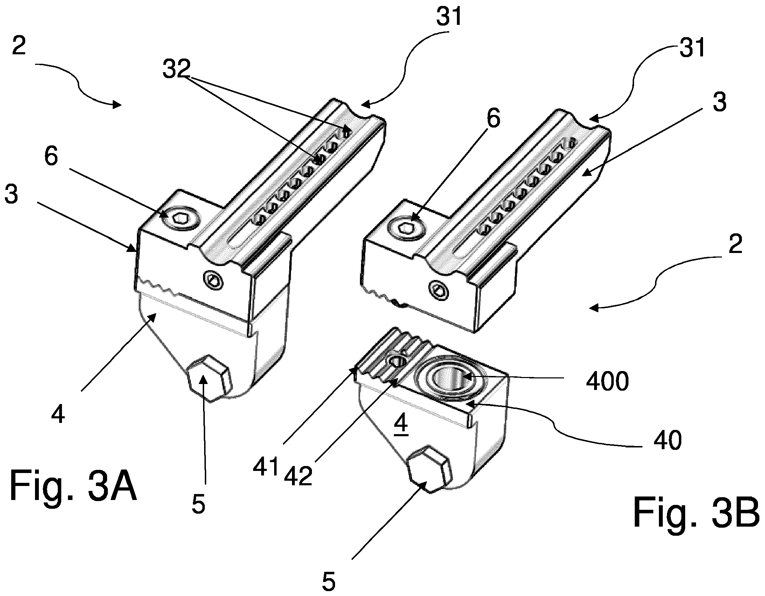

Advantageously, when it is necessary to convey the tobacco industry products P having a different size (length and/or diameter) and/or shape (or rather, when it is necessary to perform a "format change"), it is sufficient to replace the housing portion 3 fixed to the base portion 4 with another one shaped differently, without having to replace the entire conveyor 1. This considerably simplifies format change operations and reduces machine downtimes compared to known solutions. This is made possible by the second fixing means 6, which make the housing portion 3 removable from the base portion 4 (see Figure 3B).

The first fixing means 5 are arranged to preferably fasten the base portion 4 to the body 10, in a fixed manner. In other words, the base portion 4 is designed to remain fastened to the movable body 10 of the conveyor 1 even in the event of a format change, or rather, even in the event that the housing portion 3 is removed and replaced with another. This aspect is especially advantageous in those situations wherein access to the body 10 of the conveyor 1, to allow the removal or fastening of the base portion 4, is particularly complicated, as will be made clear below. The fact remains that the first fixing means 5 can also fasten the base portion 4 to the body 10 in a removable manner.

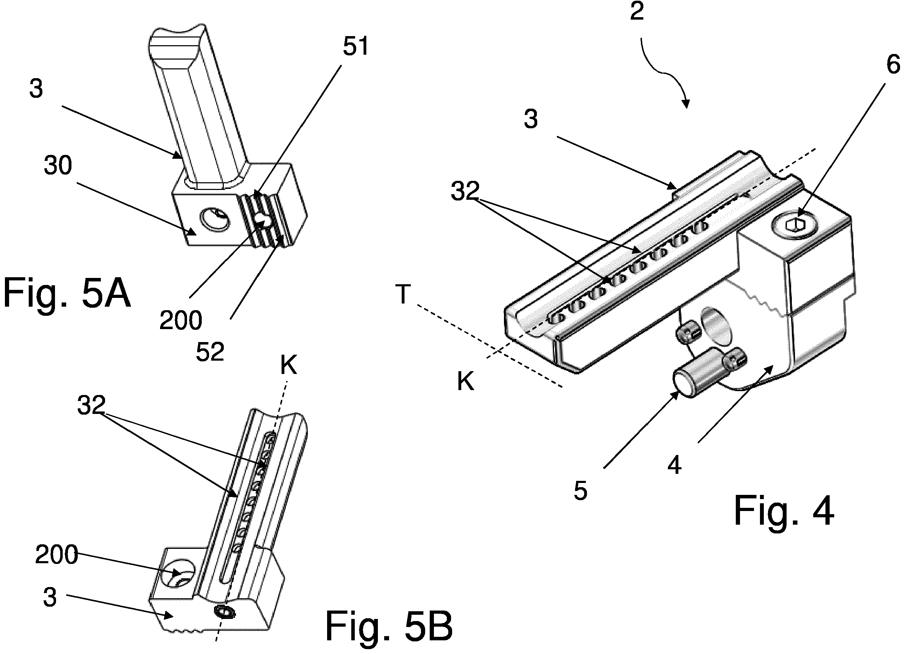

According to the illustrated embodiment, each housing portion 3 comprises at least one seat 31 shaped to receive a tobacco industry product P, and having a longitudinal development axis K (the latter is indicated only in Figures 4 and 5B).

According to the preferred embodiment, the conveyor 1 according to the present invention comprises alignment means 41, 42, 51, 52 arranged to ensure reciprocal alignment between the housing portion 3 and the base portion 4, once they have been fastened together.

Preferably, the alignment means 41, 42, 51, 52 are shaped in such a way to guarantee an alignment between the base portion 4 and the housing portion 3 along a transverse direction T (only indicated in Figure 4), preferably a perpendicular direction, with respect to the longitudinal development axis K of the seat 31. For clarity, it is specified that the longitudinal development axis K of the seat 31 coincides (substantially) with the longitudinal development of the tobacco industry product P to be conveyed, once the tobacco industry product P is in the seat 31.

Preferably, the longitudinal development axis K of the seat 31 of each housing portion 3 is parallel to the longitudinal rotation axis H of the body 10 of the conveyor 1 (or rather, to the horizontal axis of the drum, see Fig. 2).

Advantageously, the presence of the alignment means 41, 42, 51, 52 prevents there being a mutual deviation between the housing portion 3 and the base portion 4 along the direction T transverse to the longitudinal development axis K of the seat 31. This deviation would negatively affect the correct operation of the conveyor 1: indeed it is necessary that each seat 31 (which has a shape and/or size as suitable as possible for a specific product P) is in a precise and predetermined position to properly receive (and convey) a tobacco industry product P.

The tobacco industry products P are retained by suction within the seats 31 of the housing portions. For this object, with reference to Figures 2-6, each housing portion 3 comprises a plurality of openings 32 arranged along the longitudinal development axis K of the relative seat 31, which communicate with a channel inside the housing portion 3 itself, of which only the inlet 302 is visible in Figure 5A. The base portion 4 also comprises a through-opening 400 (see Figure 3B), which puts a suction source (not shown) in communication with the aforementioned channel and, therefore, with the openings 32 of the housing portion 3 (or rather, of the seats 31).

According to the preferred embodiment of the invention, the housing portion 3 and the base portion 4 overlap each other once fastened to each other, with an upper surface 40 of the base portion 4, which contacts a lower surface 30 of the housing 3 (see Figures 3A, 3B, 4, 6). In other words, when they are fastened to each other, the upper surface 40 of the base portion 4 receives thereon the lower surface 30 of the housing portion 3.

When the housing portion 3 and the base portion 4 overlap each other, the inlet 32 of the channel inside the housing portion 3 clearly communicates with the through-opening 400 of the base portion 4 described above.

According to the preferred embodiment of the illustrated invention, the alignment means 41, 42, 51, 52 comprise a first plurality of protrusions 41 arranged on the upper surface 40 of the base portion 4, which have a linear development, and are at a predetermined reciprocal distance, and a first plurality of recesses 42 (see specifically Figure 3B), each defined between two adjacent projections 41 of the first plurality of projections 41.

The alignment means 41, 42, 51, 52 also comprise a second plurality of protrusions 51 arranged on the lower surface 30 of the housing portion 3, which have a linear development, and are at a predetermined reciprocal distance, and a second plurality of recesses 52 (see specifically Figure 5A), each defined between two adjacent projections 51 of the second plurality of projections 51.

According to this embodiment, the recesses 42 of the first plurality of recesses 42 and the recesses 52 of the second plurality of recesses 52 have a linear development.

In detail, the first plurality of protrusions 41 is complementary to the second plurality of recesses 52, and the second plurality of protrusions 51 is complementary to the first plurality of recesses 42.

According to the preferred embodiment, when each housing portion 3 is arranged above the base portion 4, with the respective lower 30 and upper 40 surfaces in contact with each other, the first plurality of protrusions 41 is inserted into the second plurality of recesses 52 and the second plurality of protrusions 51 is inserted in the first plurality of recesses 42.

According to the embodiment described and illustrated above, the linear development of the first plurality of projections 41, of the second plurality of projections 51, of the first plurality of recesses 42 and of the second plurality of recesses 52 is preferably parallel to the longitudinal development axis K of the seat 31 of each housing portion 3 (therefore, in this case, also to the longitudinal axis H of rotation of the body 10).

According to this embodiment, therefore, the alignment means 41, 42, 51, 52 are shaped by the lower surface 30 of the housing portion 3 and by the upper surface 40 of the base portion 4, which each have a so-called "ribbed" or "zig zag" profile.

Advantageously, this aspect guarantees an immediate and simple removal of the housing portion 3, as well as an optimal precision of reciprocal positioning between the parts.

According to alternatives not illustrated, the alignment means 41, 42, 51, 52 may comprise, for example, a single projection 41, 51 and a single recess 42, 52 complementary to each other, arranged on the lower surface 30 of the housing portion 3 and on the upper surface 40 of the base portion 4, or vice versa. For example, the projection 41, 51 may have a linear development, and the recess 42, 52 may have a linear development like those described above.

According to the preferred embodiment, the conveyor 1 comprises a plurality of receiving assemblies 2 (Fig. 2), each comprising a base portion 4 and a housing portion 3, the latter comprising a single seat 31 shaped to receive a tobacco industry product P.

According to alternatives not illustrated, the housing portion 3 of each receiving assembly 2 may comprise two or more seats 31, each shaped to receive a tobacco industry product P.

According to the preferred embodiment of the invention, the second fixing means 6 fasten each housing portion 3 to a base portion 4 according to a transverse direction, preferably perpendicular to the aforementioned longitudinal axis H of the movable body 10 of the conveyor 1 (or rather, to the longitudinal development axis K of the seat 31, see Figures 3A, 3B, 4). In the illustrated case, the second fixing means 6 extend mainly along this direction. Preferably, the aforementioned direction is transverse, even more preferably perpendicular, also to the lower surface 30 of the housing portion 3, and to the upper surface 40 of the base portion 4 once overlapped on each other.

Advantageously, this aspect guarantees maximum accessibility of the second fixing means 6 in the case of format change, that is, in the case wherein it is necessary to replace the housing portion 3.

Preferably, the second fixing means 6 comprise a single fastening element for each housing portion 3 to be fastened to the base portion 4. Advantageously, this specification allows considerably reduction of the overall dimensions of each receiving assembly (see Figures 3A, 3B, 4).

According to the preferred embodiment of the invention, the first fixing means 5 fasten each base portion 4 to the movable body 10 in a direction substantially parallel to the aforementioned longitudinal axis H of the body 10 of the conveyor 1 (see Figures 3A, 3B, 4), or to the longitudinal development axis K of each seat 31. In the illustrated case, the first fixing means 5 extend mainly along this direction. This aspect has a positive effect during the format change of the conveyor 1: indeed, as previously specified, it is not necessary to remove the base portion 4 from the body 10 of the conveyor 1 during this operation.

According to the preferred embodiment described above, when it is necessary to remove the housing portion 3, the second fixing means 6 are easily accessible.

If, on the other hand, the housing portion is in a single body with the base portion, as occurs in some prior art solutions, with a fastening only parallel to the rotation axis of the drum, the removal operations would be particularly complicated and lengthy. Furthermore, the replacement of the housing portion 3 alone is less expensive than the possible replacement of a component formed by the housing portion and the base portion.

The first fixing means 5 and/or the second fixing means 6 comprise a screw and/or a bolt and/ or a pin and/or a plug.

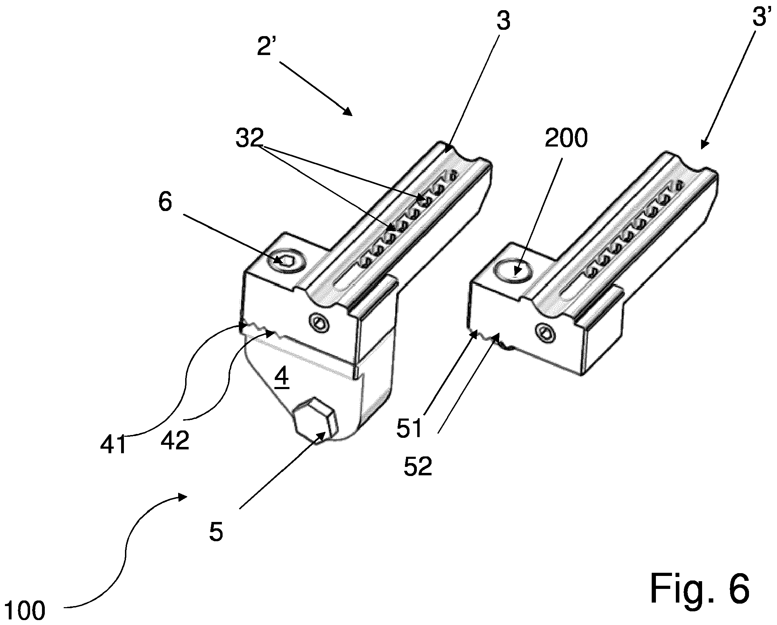

Clearly, the housing portion 3, the base portion 4 and the body 10 of the conveyor are shaped and arranged to receive the first fixing means 5 and the second fixing means 6, and for this object they form holes and/or possibly threaded openings 200 (see Figures 5A, 5B and 6, by way of example).

The invention also relates to a tobacco industry machine M comprising at least one conveyor 1 for tobacco industry products P according to any of the embodiments described above.

The machine M according to the present invention (illustrated schematically and partially in Figure 1), therefore, offers all the flexibility advantages described above regarding the conveyor 1.

The invention also relates to a kit 100 (Figure 6) for changing the format of a conveyor 1 for products P, P' of the tobacco industry, the conveyor 1 comprises a body 10 movable in rotation around a longitudinal axis H (as previously described).

"Format change", as already mentioned above, means those operations useful for adapting a conveyor 1 to receive products P, P' of different size and/or shape.

The kit 100 comprises at least one receiving assembly 2' that can be fastened to the body 10 of the conveyor 1, and configured for receiving products P, P' of the tobacco industry.

The receiving assembly 2' - in turn - comprises: at least one housing portion 3 of a first type shaped to house at least one product P (of the tobacco industry) of a first type. The receiving assembly 2' also comprises: at least one housing portion 3' of a second type, different from the housing portion 3 of the first type, shaped to house at least one product P' (of the tobacco industry) of a second type, different from the product P of the first type; and at least one base portion 4, connectable to the movable body 10 of the conveyor 1, and removably connectable to the housing portion 3 of the first type and to the housing portion 3 of the second type.

The receiving assembly 2' also comprises first fixing means 5 for fastening the base portion 4 to the body 10; and second fixing means 6 for fastening the housing portion 3 of the first type and the housing portion 3' of the second type to the base portion 4, in a removable manner.

The base portion 4 may be selectively fastened in a removable manner to the housing portion 3 of the first type or to the housing portion 3' of the second type. In this way, it is possible to fasten the housing portion 3 of the first type or the housing portion 3' of the second type to the same base portion 4, depending on the need. Advantageously, this characteristic makes it possible not to have to remove the base portion 4 from the body 10 of the conveyor 1 when it is necessary to replace the housing portion 3 of the first type with the housing portion 3' of the second type, or vice versa, reducing the replacement times with respect to known solutions.

The expression "housing portion 3 of a first type" means that this housing portion 3 is shaped and sized to receive a tobacco industry product P having a specific shape and size (length and/or diameter).

The expression "a housing portion 3' of a second type, different from the first type" means that the shape and/or size of the housing portion 3' of the second type is different from the shape and/or size of the housing portion housing 3 of the first type (therefore, also the shape and/or size of the product P' of the second type is different from that of the product P of the first type).

Preferably, the receiving assembly 2' of the kit 100 according to the present invention comprises alignment means 41, 42, 51, 52 (indicated by way of representation in Figure 6, refer to what has been previously described) arranged to ensure reciprocal alignment between the housing portion 3 of the first type, and the housing portion 3' of the second type with the base portion 4, once they have been fastened to each other.

With regard to the details of the alignment means 41, 42, 51, 52, the first fixing means 5 and the second fixing means 6, reference should be made to what has been described previously.

According to the preferred embodiment, the kit 100 comprises a plurality of receiving assemblies 2' (of which only one is shown in Figure 6), each comprising a base portion 4 and a plurality of housing portions 3, 3' of different types from each other.

The invention also relates to a method for a format change of a tobacco industry conveyor 1, the conveyor 1 comprises a movable body 10 that is rotatable around a longitudinal axis H, and at least one receiving assembly 2' at the body 10 configured for receiving tobacco industry products P, P'.

In particular, the method includes the steps of:
- removing at least one first type housing portion 3 from the respective base portion 4, the base portion 4 being fastened to the body 10 of the conveyor 1; and subsequently
- fastening a second type housing portion 3', different from the first type housing portion 3, to said base portion 4.

The housing portion 3 of the first type is shaped to house at least one product P (of the tobacco industry) of a first type, while the housing portion 3' of the second type is shaped to house at least one product P' of a second type, different (in shape and/or size) from the product P of the first type.

Advantageously, in order to carry out the format change operations, the proposed method is particularly efficient with respect to known solutions: by simply replacing the housing portion 3 of a first type with the housing portion 3' of the second type, it is possible to avoid long downtimes of the machine, and the complicated operations required in the known art to replace an entire conveyor 1 with another.

In particular, the step of removing at least the housing portion 3 of the first type from the relative base portion 4 may comprise the sub-step of removing second fixing means 6 from the housing portion 3 of the first type and from the base portion 4. Furthermore, the step of fastening the housing portion 3' of a second type, different from the first type, to the base portion 4 may comprise the sub-step of providing the second fixing means 6 to releasably fasten the housing portion 3' of the second type to the base portion 4.

According to the preferred embodiment, the sub-step of providing the second fixing means 6 to removably fasten the housing portion 3' of the second type to the base portion 4 is achieved by arranging the second fixing means 6 transversely, preferably perpendicularly, to the longitudinal axis H of the movable body 10 of the conveyor 1 (or rather, to the longitudinal development axis K of the seat 31).

Advantageously, this aspect guarantees maximum accessibility to the housing portion 3.

Preferably, only one fastening element is provided for each housing portion 3, 3' to be fastened to the base portion 4. Advantageously, this specification allows considerably reduction of the overall dimensions of each receiving assembly.

According to the preferred embodiment of the invention, the first fixing means 5 are arranged, instead, in such a manner as to fasten each base portion 4 to the movable body 10 in a direction substantially parallel to the aforementioned longitudinal axis H of the movable body 10 of the conveyor 1 (parallel to the seat 31.)

Furthermore, before the step of removing the housing portion 3 of the first type from the relative base portion 4, the method may comprise the step of fastening a base portion 4 to the movable body 10 of a conveyor 1 for tobacco industry products P.

This last step may comprise the sub-step of providing first fixing means 5 to fasten the base portion 4 to the movable body 10.

The method according to the present invention may be implemented, for example, by means of the format change kit 100 described above.

## Claims

1. A conveyor (1) for tobacco industry products (P), comprising a movable body (10) that is rotatable around a longitudinal axis (H), and at least one receiving assembly (2) configured for receiving tobacco industry products (P);
wherein the receiving assembly (2) comprises: at least one housing portion (3) shaped to receive at least one tobacco industry product (P) and a base portion (4), arranged between the housing portion (3) and the body (10);
**characterized in that** it comprises first fixing means (5) for fastening the base portion (4) to the body (10); and
second fixing means (6) for fastening the housing portion (3) to the base portion (4) in a removable way.

2. The conveyor (1) of the preceding claim, wherein each housing portion (3) comprises at least one seat (31) shaped to receive a tobacco industry product (P) having a longitudinal development axis (K);
the conveyor (1) also comprising alignment means (41, 42, 51, 52) shaped in such a way to guarantee an alignment between the base portion (4) and the housing portion (3) along a transverse direction (T), preferably a perpendicular direction, with respect to the longitudinal development axis (K).

3. The conveyor (1) of claim 2, wherein the alignment means (41, 42, 51, 52) comprise at least one protrusion (41, 51) and at least one recess (42, 52) complementary to each other.

4. The conveyor (1) of any one of the preceding claims, wherein the housing portion (3) and the base portion (4) are overlapped when fastened together, with an upper surface (40) of the base portion (4) that contacts a lower surface (30) of the housing portion (3).

5. The conveyor (1) of claims 3 and 4, wherein the alignment means (41, 42, 51, 52) comprise a first plurality of protrusions (41) arranged on the upper surface (40) of the base portion (4), having a linear development and being at a predetermined reciprocal distance and a first plurality of recesses (42) defined between two adjacent protrusions (41) of the first plurality of protrusions (41); and a second plurality of protrusions (51) on the lower surface (30) of the housing portion (3), which have a linear development, and are at a predetermined reciprocal distance, and a second plurality of recesses (52) defined between two adjacent protrusions (51) of the second plurality of protrusions (51).

6. The conveyor (1) of any one of the preceding claims, comprising a plurality of receiving assemblies (2), each comprising a base portion (4) and a housing portion (3), the latter comprising a single seat (31) shaped to receive a tobacco industry product (P).

7. The conveyor (1) of any one of the preceding claims, wherein the first fixing means (5) fasten each base portion (4) to the movable body (10) along a direction substantially parallel to said longitudinal axis (H) of the body (10); and wherein the second fixing means (6) fasten each housing portion (3) to a base portion (4) along a transverse direction, preferably a perpendicular direction, to said longitudinal axis (H) of the body (10).

8. The conveyor (1) of the preceding claim, wherein the second fixing means (6) comprise a single fixing element (6) for each housing portion (3) to be fastened to the base portion (4).

9. The conveyor (1) of any one of the preceding claims, wherein the first fixing means (5) and/or the second fixing means (6) comprise a screw and/or a bolt and/ or a pin and/or a plug.

10. A machine (M) of the tobacco industry comprising at least one conveyor (1) according to any one of the preceding claims.

11. A kit (100) for changing the format of a conveyor (1) for tobacco industry products (P, P'), the conveyor (1) comprising a movable body (10) that is rotatable around a longitudinal axis (H);
the kit (100) being **characterized in that** it comprises at least one receiving assembly (2') that can be fastened to the body (10) of the conveyor (1), and configured for receiving tobacco industry products (P, P');
the receiving assembly (2') in turn comprises: at least one first type housing portion (3) shaped to receive at least one tobacco industry product (P) of a first type; at least one second type housing portion (3'), different from the first type housing portion (3), shaped to receive at least one product (P') of a second type, different from the product (P) of the first type; and at least one base portion (4), which can be fastened to the movable body (10) of the conveyor (1), which can be fastened in a removable way to the first type housing portion (3) and the second type housing portion (3');
first fixing means (5) for fastening the base portion (4) to the body (10); and
second fixing means (6) for fastening the housing portion (3) of the first type and the housing portion (3') of the second type to the base portion (4) in a removable way.

12. The kit (100) of the preceding claim, wherein the receiving assembly (2') further comprises alignment means (41, 42, 51, 52) arranged for ensuring a reciprocal alignment between the first type (3) housing portion and the base portion (4), when fastened together, and between the second type (3') housing portion and the base portion (4), when fastened together.

13. The kit (100) of claim 10 or 11, comprising a plurality of receiving assemblies (2').

14. A method for changing the format of a tobacco industry conveyor (1), the conveyor (1) comprising a movable body (10) that is rotatable around a longitudinal axis (H) and at least one receiving assembly (2') for receiving tobacco industry products (P, P');
the method being **characterized in that** it comprises the steps of:
- removing at least one first type housing portion (3) of the receiving assembly (2') from a respective base portion (4) of the receiving assembly (2'), the base portion (4) being fastened to the body (10) of the conveyor (1); and subsequently
- fastening a second type housing portion (3'), different from the first type housing portion (3), to said base portion (4).

15. The method of the preceding claim, wherein the step of removing at least one first type housing portion (3) from a respective base portion (4) comprises the sub-step of removing second fixing means (6) from the first type housing portion (3) and from the base portion (4), and wherein the step of fastening the second type housing portion (3'), different from the first type housing portion (3), to said base portion (4) comprises the sub-step of providing the second fixing means (6) for fastening - in a removable manner - the second type housing portion (3') to the base portion (4).
